# EUROPEAN PATENT SPECIFICATION

(11) **EP 1 256 273 B1**
(45) Date of publication and mention of the grant of the patent: **10.08.2005**
(21) Application number: 01304752.7
(22) Date of filing: 30.05.2001
(51) Int. Cl.: A01K 87/00

(54) **Joint type fishing rod**
Angelrute mit Steckverbindung
Canne à pêche à emboîtements

(30) Priority: 10.05.2001 JP 2001140426
(43) Date of publication of application: 13.11.2002
(73) Proprietor: DAIWA SEIKO INC., Higashikurume-shi, Tokyo (JP)
(72) Inventor: Sunaga, Syunji, c/o Daiwa Sports Ltd, Wishaw ML2 OEY,Lanarkshire (GB); Usuda, Toshikazu, c/o Daiwa Sports Ltd, Wishaw ML2 OEY, Lanarkshire (GB)
(74) Representative: Brunner, Michael John

(56) References cited:
- EP-A- 0 062 973
- FR-A- 815 177
- FR-A- 839 342
- FR-A- 2 106 180

## Description

The present invention relates to a relatively long joint type fishing rod, called as a pole rod or a bottom rod, which is mainly used for fishing tournament.

During fishing tournament using a relatively long joint type fishing rod called as a pole rod, when fish is hooked, rod sections are removed sequentially from a butt rod section so that the fishing rod is changed to have a desired short length appropriate for catching the fish, because a fishline portion including a fishing device and being suspended from the tip of the fishing rod is short. Then, the removed rod sections are jointed sequentially from tip end side rod section so that the fishing rod is changed to have the original long length appropriate for guiding the fishing device to a target point. The victory or defeat of the tournament largely depends on how quickly these removal and insertion operations for the rod sections are carried out. In order to shorten a required time, each rod section to be removed and inserted is formed longer in length than that of a general-purpose fishing rod, to thereby decrease the number of joint portions.

In the case of the j oint type fishing rodused for the tournament of this type, there is no substantial need to disassemble a tip rod section from a tip supporting rod section during the tournament, and therefore any joint structure can be used for jointing the tip rod section to the tip supporting rod section. However, butt side rod sections must employ a joint structure, such as a normal joint type, a reverse joint type, a socket joint type, etc., which enables the removal and insertion of the butt side rod sections The normal joint type means such a structure that an outside of a butt side end of a tip side rod section is fitted to an inside of a tip side end of an adjacent butt side rod section. The reverse joint type means such a structure that an inside of a butt side end of a tip side rod section is fitted to an outside of a tip side end of an adjacent butt side rod section. The socket joint type means such a structure that a socket member is fixedly held by an inside of one of a butt side end of a tip side rod section and a tip side end of an adjacent butt side rod section to protrude from an axial end face of the one end, and the protruding portion of the socket member is fitted to an inside of the other end so that axial end face of the one end is contacted with an axial end face of the other end.

Further, in order to smoothly catch the fish using the fishing rod changed to have a short length, it is important to set the short length of the fishing rod to correspond to a length from the tip of the fishing rod to the hooked fish.

However, since each of the rod sections is, in general, long, the length of the fishing rod largely differs between a case where one rod section is not removed and a case where the one rod section is removed, and consequently an angler encounters difficulty in changing the fishing rod to have an appropriate length, and wastes the tournament time in catching the hooked fish.

FR 839342 discloses a joint type fishing rod made of wood or metal and having a length of approximately 5 metres.

According to the present invention, there is provided a joint type fishing rod comprising one tip rod section, three or more intermediate rod sections and one butt rod section, wherein:
of the intermediate rod sections, one or two intermediate rod sections other than an intermediate rod section directly jointed to the tip rod section is considerably shorter than most of the rod sections located rearwardly of the one or two intermediate rod sections; and
the rod sections of the short one or two rod sections and the rearwardly located rod sections are joined using a joint structure other than a telescopic joint structure; characterised in that
the total number of rod sections is at least eight;
the shorter intermediate rod section(s) is (are) any of the 3^{rd} to 7^{th} rod sections from the tip; and
a reverse joint type is used for at least one joint portion between adjacent rod sections; and
wherein each of the rod sections are formed as a fibre-reinforced-resin-made rod section reinforced by reinforcing fibres using synthetic resin as matrix.

Accordingly, an object of the present invention is to provide a joint type fishing rod which enables quick length change of the fishing rod, and which realises smooth catching of fish.

The rod sections from the butt rod section to the short intermediate rod section are jointed together using a joint. structure other than the telescopic joint structure (i.e. using a joint structure such as a normal joint type, a reverse joint type, a socket joint type, which enables removal of the rod section rearwardly during fishing) . Therefore, each of these rod sections can be removed rearwardly one by one to change the length of the fishing rod. Further, since the one or two intermediate rod sections is considerably shorter than the most of the rod sections located rearwardly of the one or two intermediate rod sections, fine length adjustment can be realized depending on whether or not the short intermediate rod section is removed in comparison to the case where the short intermediate rod section has a substantially the same length as those of the rearwardly located rod sections. Accordingly, the fishing rod can be changed to have such a suitable length as to enable the smooth catching of the fish.

According to a second aspect of the present invention, there is provided the joint type fishing rod of the first aspect, wherein the short one or two intermediate rod sections has a length substantially falling in a range from 45cm to 90cm, and the most of the rearwardly located rod sections has a length equal to or larger than 130cm.

The lengths of the rod sections in the fishing rod of the first aspect are exemplified and specifically defined. The short intermediate rod section having the length falling in this range is convenient.

According to a third aspect of the present invention, there is provided the joint type fishing rod of the first or second aspect, wherein a main body of each of the rearwardly located rod sections contains longitudinally oriented reinforcing fibers having tensile elastic module not smaller than 40 ton/mm².

This arrangement makes the fishing rod high in rigidity and light in weight.

According to the fourth aspect of the invention, there is provided the joint type fishing rod according to any one of first to third aspects, wherein a main body of each of the rearwardly located rod sections is formed by a fiber-reinforced-prepreg having primary reinforcing fibers oriented longitudinally and auxiliary reinforcing fibers oriented circumferentially, the auxiliary reinforcing fibers are less in quantity than the primary reinforcing fibers, and tensile elastic module of the auxiliary reinforcing fibers is not larger than tensile elastic module of the primary reinforcing fibers, and not smaller than 30 ton/mm².

This arrangement makes the fishing rod high in rigidity and light in weight.

According to a fifth aspect of the present invention, there is provided the joint type fishing rod of any one of the first to fourth aspects, wherein the short one or two intermediate rod sections is located in a region between 2.5m and 6.5m from a tip of the fishing rod in a jointed state.

During actual fishing, fish is frequently caught using the fishing rod of which the length is changed to the range of 2.5 to 6.5m, and therefore it is preferable to dispose the short intermediate rod in this range.

According to a sixth aspect of the present invention, there is provided the joint type fishing rod of any one of first to fifth aspects, wherein at least one of the short one or two intermediate rod sections has a region in which diameter is increased toward a butt side at a taper ratio larger than taper ratios of the rod sections located forwardly and rearwardly of the short one or two intermediate rod sections.

The joint type fishing rod used for tournament is long, and the portions of the fishing rod other than the tip inherently provided with flexibility must have high rigidity in order to accurately locate a fishing device to a target point. For this reason, if the short intermediate rod section is enlarged in diameter at the large taper ratio, the rod sections, which are likely to be removed or inserted and which are located at a butt side region from the short intermediate rod section, can have the larger rod section outer diameter to ensure the high rigidity. That is, the rod section immediately behind the short intermediate rod section can have a large outer diameter, and thus a portion of the fishing rod behind the short intermediate rod section to the butt rod section can be effectively increased in rigidity. A portion of the fishing rod located forwardly of the short intermediate rod section having the large taper ratio can be made relatively small in diameter to provide sufficient flexibility required as the fishing rod.

According to a seventh aspect of the present invention, there is provided the joint type fishing rod of any one of the first to sixth aspects, wherein at least one of the short one or two intermediate rod sections has a butt side end of which an outer diameter falls within a range of 2.5cm to 4.0cm.

Since the outer diameter falling within the range of 2.5cm to 4.0cm facilitates the grasping of the fishing rod during the fishing tournament, the fishing rod handling ability is enhanced in a case where the short intermediate rod section is not removed and is maintained as the angler side rod section during the catching of the fish.

According to an eighth aspect of the present invention, there is provided the joint type fishing rod according to any one of the first to seventh aspects, wherein the most of the rod sections located rearwardly of the short one or two intermediate rod sections has an annular portion that is located at a longitudinally intermediate portion and that is thicker than regions located forwardly and rearwardly of the intermediate portion.

The rod sections located rearwardly of the short intermediate rod section is, in general, removed during the catching of the fish. Since each of these rod sections is long in length, and thus the intermediate portion of the rod section is likely to be grasped when the rod section is removed. Further, during the tournament, the intermediate portion of the rod section is likely to be grasped strongly, and thus must have a sufficient strength bearing against the strong grasping force. The same is applied to a case where the rod section is inserted. In this example, the intermediate portion is made thick to increase anti-crashing property to bear against such strong grasping.

### BRIEF DESCRIPTION OF THE DRAWINGS

Fig. 1 is an entire view of a joint type fishing rod according to an embodiment of the present invention.
Fig. 2 shows a state in which rod sections of the fishing rod shown in Fig. 1 are disassembled.
Fig. 3 is a sectional view showing a short intermediate rod section according to another embodiment of the present invention.

### DESCRIPTION OF THE PREFERRED EMBODIMENT

Hereafter, an embodiment of the present invention will be described in detail with reference to the accompanying drawings.

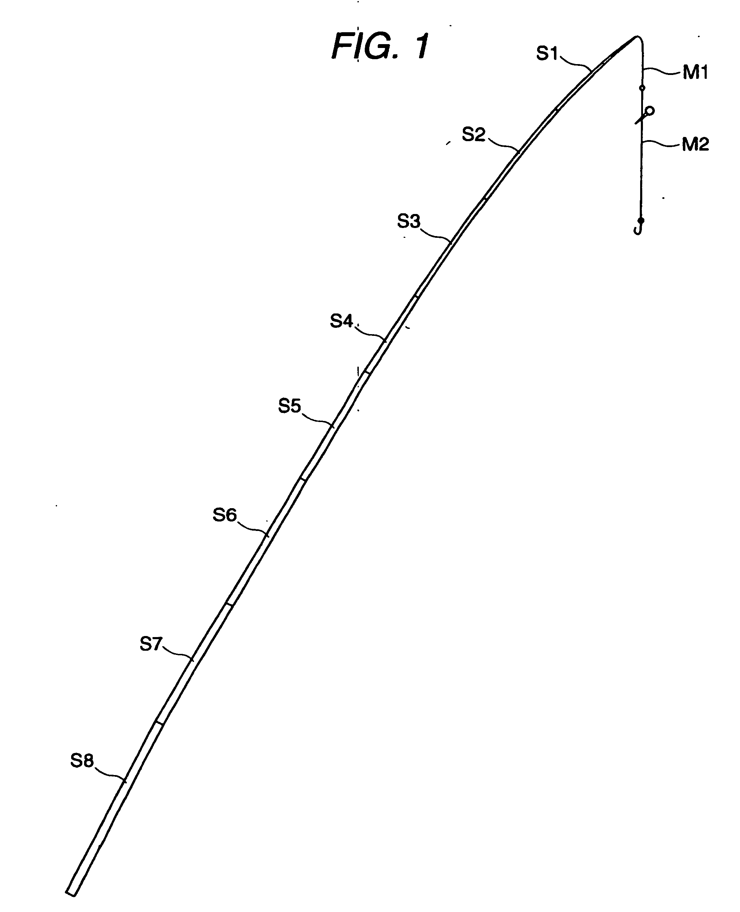

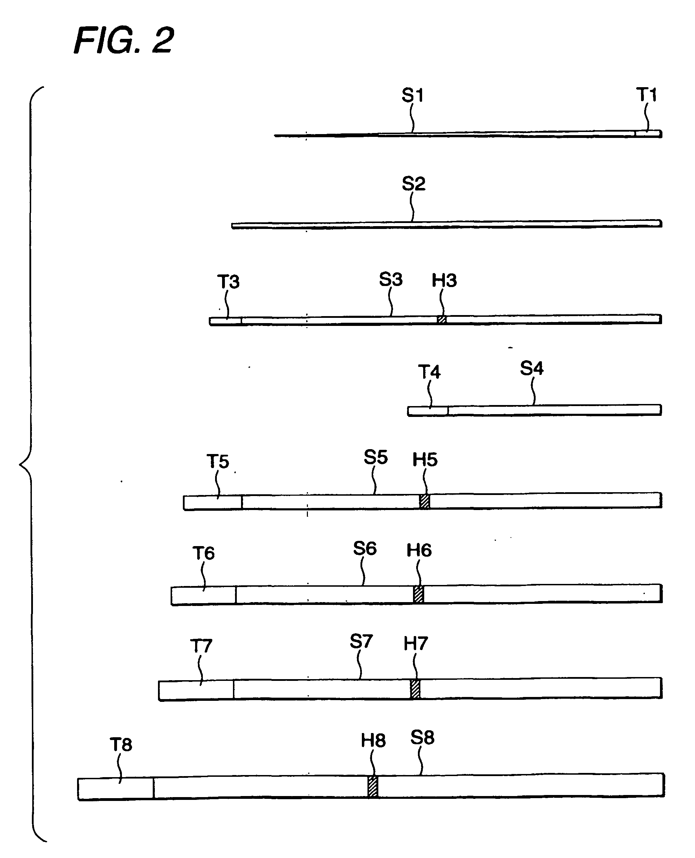

Fig. 1 shows a joint type fishing rod called a pole rod according to the present invention, in a state in which all of rod sections are jointed together for use. Fig. 2 is a side view showing a state in which all of the rod sections are disassembled. In this example, a tip rod section S1 is telescopically jointed to a tip supporting rod section S2 that is one of intermediate rod sections S2...S7, and an intermediate rod section S2 and subsequent rod sections including a butt rod section S8 are jointed such that a tip side rod section is jointed to an adjacent butt side rod section in a reverse joint manner in which an inner side of a tip side end of the adjacent butt side rod section is fitted onto an outer side of a butt side end of the tip side rod section. Accordingly, the intermediate rod section S3 and the subsequent rod sections, i.e. the rod sections S3, S4, S5, S6, S7 and S8 can be removed rearwardly during fishing.

Each of the rod sections S1...S8 is of a fiber-reinforced-resin-made rod section using carbon fibers and the like as reinforcing fibers and synthetic resin, such as epoxy resin, as matrix, and each of the rod sections S1...S8 is made tubular. In this embodiment, carbon fibers are used mainly as the reinforcing resin, and epoxy resin is used as matrix resin. A guide line M1, having a length of about 1 to 2 mm from a desired portion of the interior of the tip rod section S1 or the tip supporting rod section S2 and being made of elastic rubber, is pulled out from a tip end of the tip rod section, and a fishing device M2 is mounted to a leading end of the guide line M1. In general, the fishing rod is used in such a state that a length from the tip end of the tip rod section S1 to a lower end (a fishing hook) of the fishing device M2 is relatively short such as about 2m. This joint type fishing rod can be stored such that the front side rod sections in the reverse joint manner are inserted into the rear side rod sections through rear ends thereof, and thus the stored state is only one piece of the butt rod section S8 in an external view.

The description will be given hereafter mainly referring to Fig. 2. The lengths of the rod sections S1, ....S8 in this embodiment are respectively, in the order from the tip rod section S1, 1300, 1360, 1410, 700, 1460, 1470, 1540 and 1630 mm. Accordingly, the intermediate rod section S4 is considerably shorter than each of the subsequent rear side rod sections S5, S6, S7 and S8, and is roughly about one half of each of these rod sections in length. In this embodiment, the intermediate rod section S4 is considerably shorter than each of the front side rod sections S3, S2 and S1.

The joint portions of the smaller diameter side rod sections in the joint structure are respectively denoted by T1, T3, T4, T5, T6, T7 and T8 in the order from the tip rod section, and the joint portions respectively have the lengths of 60, 65, 80, 85, 90, 100 and 110 mm in the same order. The tolerance for each of the joint portions is about +20 and -10. The entire length of the fishing rod shown in Fig. 1 is about 10m.

Average taper ratios, each being defined such that a value obtained by subtracting a front end diameter of a rod section from a rear end diameter of the rod section is divided by a length of the rod section, are 3.46, 7.63, 7.16, 8.37, 3.68, 3.76, 3.55, and 3.55/1000 in the order from the tip rod section. The preferable taper ratios for the rod sections are 2-4, 4-8, 8-60 (more preferably, 10-50), 3-5, 3-5, 2-4 and 2-4 /1000 in the order from the tip rod section. The taper ratio for each of the rod sections should not be limited to those described above, and can be set to be an arbitrary value.

The inner diameter and the outer diameter of the rear end of each of the rod sections in this embodiment are shown below. In the order from the tip rod section, the outer diameter (the inner diameter) are 7.23 (6.00), 18.08 (17.26), 26.72 (25.85), 31.21 (30.00), 34.58 (33.38), 38.24 (36.93), 41.42 (40.11), and 44.94 (43.70) mm, respectively. It can be found that this tournament pole rod has larger outer diameters in the outer diameter largest butt rod section S8 and the rod sections in the proximity thereof in comparison with a general-purpose fishing rod.

Further, the rod sections subsequently to (i.e rearward from) the short intermediate rod section S4 are smaller in inner and outer diameter increasing ratio than the rod sections forward from the short intermediate rod section S4. The short intermediate rod section S4 is increased in diameter abruptly (i.e. in a large taper ratio) in comparison with the intermediate rod sections S 3 and S5 located forward and backward of the short intermediate rod section S4. Consequently, the fishing rod has larger outer diameter in a region starting from the rod section S5 just behind the short intermediate rod section S4 and thus the rigidity of the fishing rod section in this region can be high. Therefore, the taper ratios of the rod section S5 and the subsequent rod sections can be made small.

Moreover, in this embodiment, each of the rod sections subsequently to (i.e. rearward from) the short intermediate rod section S4 is constructed such that a rod main body of each rod section contains longitudinally oriented reinforcing fibers having tensile elastic module not smaller than 40 ton/mm². It is preferable to form the rod main body of each rod section by a fiber-reinforcing prepreg having primary reinforcing fibers oriented longitudinally and auxiliary reinforcing fibers oriented circumferentially. The auxiliary reinforcing fibers are less in quantity than the primary reinforcing fibers, and tensile elastic module of the auxiliary reinforcing fibers is not larger than tensile elastic module of the primary reinforcing fibers, and not smaller than 30 ton/mm². This arrangement can secure high rigidity of the fishing rod while reducing the weight of the fishing rod.

During fishing, the fishing device is placed at a point using the fishing rod in the long state shown in Fig. 1, and if fish is hooked, the fishing rod are made shorter by subsequently removing the rod sections in the order from the butt rod section so that the fishing rod is set to have a suitable length for catching the fish. In this embodiment, since the length from the tip end of the tip rod section to the leading end of the fishing device is about 2m, and since the flexure of the fishing rod and the extension of the extension rubber M1 are small if the hooked fishing is not so larger, the removal of the rear rod sections until the intermediate rod section S3 or S4 serves as an angler side rod section will ease the catching of the fish. In this case, whether the short intermediate rod section S4 is maintained or removed enables the adjustment of the length of the fishing rod to some degrees (in this case, 70cm), and thus it is possible to adjust the length of the fishing rod to be suitable for catching the fishing depending on the kind or size of the hooked fish.

To cope with a case where considerably large fish is hooked, or a point in a deep layer is targeted during fishing (the length of the from the tip end of the tip rod section to the leading end of the fishing device is set to be larger), it is conceivable to design such a joint type fishing rod that another one of the intermediate rod sections S5, S6 and S7 in place of the intermediate rod section S4 is set to be short. This joint type fishing rod can ease the catching of the fish when the rod section located rearward of the intermediate rod S4 serves as the angler side rod section. Alternatively, to cope with a case where smaller fish is to be hooked, or a point in a shallow layer is targeted during fishing, it is conceivable to design such a joint type fishing rod that the intermediate rod section S3 in place of the intermediate rod section S4 is set to be short.

The scope of the present invention covers not only a joint type fishing rod in which the intermediate rod section S4 is short, but also a joint type fishing rod in which the continuous intermediate rod section S5 or a remotely located intermediate rod section S6 or S7 is short. The length of the short intermediate rod section is preferably in the range of about 45-90cm, but may be set to have a value outside this range. In a case where each of continuous two rod sections is set short, a large adjustable range can be provided around a predetermined length of the fishing rod. In a case where each of remotely located rod sections is set short, one fishing rod can be adapted to two kinds of fishing in which the point in the deep layer and the point in shallow layer are targeted, or can be used to catch plural kinds of fish having a large weight difference.

In the embodiment shown in Figs. 1 and 2, an annular portion H3, H5, H6, H7, H8 is provided, which is located at an intermediate portion in length of the rod section S3, S5, S6, S7, S8 and which is thicker than the regions forward and rearward thereof. This intermediate portion is reinforced such that a narrow width prepreg is wound in an overlapping manner on and around a prepreg forming the entire rod section so that reinforcing fibers of the narrow width prepreg are oriented substantially in a circumferential direction. Prepregs may be overlapped such that reinforcing fibers in the circumferential direction and in the longitudinal direction intersect with each other, and further prepregs may be overlapped such that reinforcing fibers intersect with the longitudinal direction from right and left sides. Prepreg may be overlapped on an inner side of prepreg forming the entire rod section, or prepregs may be respectively overlapped on both inner and outer sides of the prepreg forming the entire rod section, but it is preferable to provide prepreg on the outer side to protrude slightly outwardly so that the protruding portion can be gripped by a hand when the rod section is removed rearwardly. To facilitating the gripping by the hand, it is preferable to set the width of the protruding portion to be equal to or smaller than a width of the hand, for example, to be about 1-5cm.

As described above, the annular portion high in anti-crashing strength is provided to the intermediate portion of the rod section S3, S5, S6, S7, S8. When the rod sections are handled during tournament, i.e. the rod section is quickly grasped and removed to be thrown rearwardly or conversely the rod sections are jointed together, the longitudinally intermediate portion of each rod section is likely to be grasped since most of the rodsections are long, i.e. not smaller than 130cm. Therefore, since the annular portion enhances the anti-crashing performance of the rod section, the rod section is durable even if the rod section is grasped quickly. Further, since the most of the rod sections are long, i.e. not smaller than 130cm, the removal of the one rod section decreases the length of the fishing rod correspondingly to the length of the removed rod section, and the joint of the one rod section increases the length of the fishing rod correspondingly to the length of the jointed rod section, and therefore, the fishing rod according to the present invention is effectively used in a case where a time required for the length adjustment must be shortened, such as fishing tournament.

In this embodiment, the joint portion between the intermediate rod sections S2 and S3 and the subsequent joint portions are each designed as a revere joint type. However, the present invention should not be limited thereto, and for example, each of these joint portions may be designed as a normal joint type or the like as long as the rod sections can be removed rearward during fishing. In each joint portion of the reverse joint type or the normal joint type, if an inner edge of the end of a larger diameter side rod section is chamfered (or formed as a curved surface), the quick insertion in jointing operation can be realized, and thus the rapid jointing operation can be realized during fishing tournament. Further, the fishing using the elastic rubber has been described, but the fishing rod according to the present invention can be used in fishing that does not use the elastic rubber. Moreover, the various description given above with reference to the intermediate rod section S4 can be also applied to a case where an intermediate rod section other, in location, than the intermediate rod section S4 is set as a short intermediate rod section.

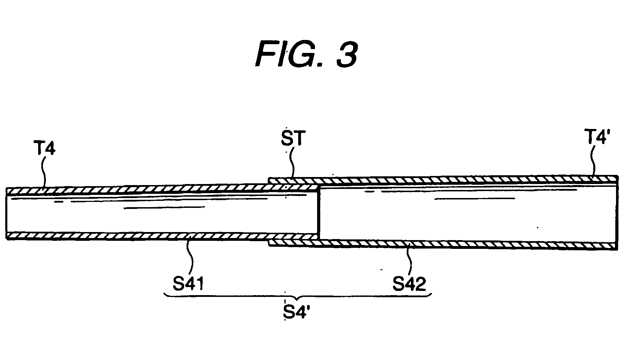

The short intermediate rod section may be formed as a single rod section formed by winding a continuous prepreg, like the intermediate portion S4 of the embodiment shown in Figs. 1 and 2, but the short intermediate rod section may be formed as a short intermediate rod section S4' as shown in Fig. 3, which is constructed by two rod section elements S41 and S42 coupled together. Of course, the short intermediate rod section may be constructed by three or more rod section elements coupled together. The coupling in the example shown in Fig. 3 employs a telescopic joint, and a joint portion ST is adhesively fixed using adhesive agent. A normal joint may be employed, and the rod section elements may be coupled without the use of the adhesive agent to enable the disassembly. Reinforcing layers are respectively formed on a front side joint portion T4 of the short intermediate rod section S4' and a rear side joint portion T4' thereof, thereby protecting the joint portions T4, T4' from being damaged even if the rod section S4' is jointed with impact during tournament or the like.

In a case where the short intermediate rod section is constructed by the rod section elements coupled together as noted above, it is possible to make large the average taper ratio (the value obtained by dividing diameter difference between the rear end and the front end of the coupled short intermediate rod section by the length of the short intermediate rod section) even if the average taper ratio of each rod section element is small. That is, the diameter difference between the front and rear ends can be increased. Further, if the average taper ratio of the rearmost rod section element (the rod section element S42 in the example shown in Fig. 3) is set to be small (including zero), the large outer diameter can be provided, which facilitates the grasping and enhances the handling ability when the length adjustment causes this rod section to serve as the angler side rod section. Moreover, it is preferable to provide an intermediate portion of the short intermediate rod section with an abrupt taper portion that has a larger taper ratio than regions forward and rearward thereof, to thereby increase the diameter difference between the front and rear ends of the short intermediate rod section.

As clear from the above description, the present invention can provide a joint type fishing rod which enables quick length change of the fishing rod, thereby smoothly realizing catching of fish.

## Claims

1. A joint type fishing rod comprising one tip rod section (S1), three or more intermediate rod sections (S2-S7) and one butt rod section (S8), wherein:
of the intermediate rod sections (S2-S7), one or two intermediate rod sections other than an intermediate rod section (S2) directly jointed to the tip rod section is considerably shorter than most of the rod sections located rearwardly of the one or two intermediate rod sections; and
the rod sections of the short one or two rod sections and the rearwardly located rod sections are joined using a joint structure other than a telescopic joint structure; **characterised in that**
the total number of rod sections (S1-S8) is at least eight;
the shorter intermediate rod section(s) is (are) any of the 3^{rd} to 7^{th} rod sections (S3-S7) from the tip (S1); and
a reverse joint type is used for at least one joint portion between adjacent rod sections; and
wherein each rod section (S1-S8) is formed as a fibre-reinforced-resin-made rod section reinforced by reinforcing fibres using synthetic resin as matrix.

2. A joint type fishing rod according to claim 1, wherein the short one or two intermediate rod sections has a length substantially falling in a range from 45cm to 90cm, and the most of the rearwardly located rod sections (S8) has a length equal to or larger than 130cm.

3. A joint type fishing rod according to 1 or 2, wherein a main body of each of the rearwardly located rod sections contains longitudinally oriented reinforcing fibres having tensile elastic module note smaller than 40 ton/mm².

4. A joint type fishing rod according to any one of claims 1 to 3, wherein a main body of each of the rearwardly located rod sections is formed by a fibre-reinforced-prepeg having primary reinforcing fibres oriented longitudinally and auxiliary reinforcing fibres oriented circumferentially, the auxiliary reinforcing fibres are less in quantity than the primary reinforcing fibres, and tensile elastic module of the auxiliary reinforcing fibres is not larger than tensile elastic module of the primary reinforcing fibres, and not smaller than 30 ton/mm².

5. A joint type fishing rod according to any one of claims 1 to 4, wherein the short one or two intermediate rod sections (S3-S7) is located in a region between 2.5m and 6.5m from a tip of the fishing rod in a jointed state.

6. A joint type fishing rod according to any one of claims 1 to 5, wherein at least one of the short one or two intermediate rod sections (S3-S7) has a region in which diameter is increased toward a butt side at a taper ratio larger than taper ratios of the rod sections located forwardly and rearwardly of the short one or two intermediate rod sections.

7. A joint type fishing rod according to any one of claims 1 to 6, wherein at least one of the short one or two intermediate rod sections (S3-S7) has a butt side end of which an outer diameter falls within a range of 2.5cm to 4.0cm.

8. A joint type fishing rod according to any one of claims 1 to 6, wherein the most rearward of the rod sections located rearwardly of the short one or two intermediate rod sections has an annular portion that is located at a longitudinally intermediate portion and that is thicker than regions located forwardly and rearwardly of the intermediate portion.

## Patentansprüche

1. Angelrute von Verbindungstyp mit einem oberen Rutenabschnitt (S1), drei oder mehr dazwischen liegenden Rutenabschnitten (S2-S7) und einem hinteren Rutenabschnitt (S8), bei der
von den dazwischen liegenden Rutenabschnitten (S2-S7) ein oder mehrere andere dazwischen liegende Rutenabschnitte als ein dazwischen liegender Rutenabschnitt (S2), der unmittelbar mit dem oberen Rutenabschnitt verbunden ist, bedeutsam kürzer als die meisten der Rutenabschnitte sind, die hinter dem einen oder zwei dazwischen liegenden Rutenabschnitten angeordnet sind; und
die Rutenabschnitte der kurzen ein oder zwei Rutenabschnitte und die rückwärtig angeordneten Rutenabschnitte unter Verwendung einer anderen Verbindungsstruktur als eine teleskopische Verbindungsstruktur verbunden sind;
**dadurch gekennzeichnet, dass**
die gesamte Anzahl an Rutenabschnitten (S1-S8) wenigstens acht beträgt;
der kürzere dazwischen liegende Rutenabschnitt bzw. die kürzeren dazwischen liegenden Rutenabschnitte einer der dritten bis siebten Rutenabschnitte (S3-S7) ausgehend von der Spitze (S1) ist bzw. sind; und
wobei jeder Rutenabschnitt (S1-S8) als faserverstärkter, aus Harz hergestellter Rutenabschnitt ausgebildet ist, der durch verstärkende Fasern unter Verwendung von Kunststoff als Matrix verstärkt ist.

2. Angelrute von Verbindungstyp nach Anspruch 1, bei der der kurze dazwischen liegende Rutenabschnitt bzw. die kurzen dazwischen liegenden Rutenabschnitte eine Länge aufweisen, die im Wesentlichen in einen Bereich von 45 cm bis 90 cm fällt, und der am weitest hinten angeordnete Rutenschnitt (S8) eine Länge hat, die gleich oder größer als 130 cm ist.

3. Angelrute von Verbindungstyp nach Anspruch 1 oder 2, bei der ein Hauptkörper jedes der rückwärtig angeordneten Rutenabschnitte in Längsrichtung ausgerichtete verstärkende Fasern enthält, die ein Zugspannungselastizitätsmodul deutlich kleiner als 40 T/mm² haben.

4. Angelrute von Verbindungstyp nach einem der Ansprüche 1 bis 3, bei der ein Hauptkörper jedes der rückwärtig angeordneten Rutenabschnitte aus einem faserverstärkten kunststoffimprägnierten Material hergestellt ist, das verstärkende Hauptfasern, die in Längsrichtung ausgerichtet sind, und verstärkende Hilfsfasern, die in Umfangsrichtung ausgerichtet sind, aufweist, wobei die verstärkenden Hilfsfasern in geringerem Umfang als die verstärkenden Hauptfasern vorhanden sind, und Zugspannungselastizitätsmodul der verstärkenden Hilfsfasern nicht größer als das Zugspannungselastizitätsmodul der verstärkenden Hauptfasern ist und nicht kleiner als 30 T/mm² ist.

5. Angelrute von Verbindungstyp nach einem der Ansprüche 1 bis 4, bei der in einem verbundenen Zustand der (die) kurze eine oder zwei dazwischen liegende(n) Rutenabschnitt(e) (S3-S7) ausgehend von einer Spitze der Angelrute in einem Bereich zwischen 2,5 m und 6.5 m angeordnet ist (sind).

6. Angelrute von Verbindungstyp nach einem der Ansprüche 1 bis 5, bei der wenigstens einer der kurzen einen oder zwei dazwischen liegenden Rutenabschnitte (S3-S7) einen Bereich aufweist, in dem ein Durchmesser in Richtung zu einer hinteren Seite bei einem Verjüngungsverhältnis größer als Verjüngungsverhältnisse der Rutenabschnitte vergrößert ist, die vor und hinter dem (den) kurzen einen oder zwei dazwischen liegenden Rutenabschnitt(en) angeordnet sind.

7. Angelrute von Verbindungstyp nach einem der Ansprüche 1 bis 6, bei der wenigstens einer der kurzen einen oder zwei dazwischen liegenden Rutenabschnitte (S3-S7) eine hintere Endseite aufweist, dessen Außendurchmesser in einen Bereich von 2,5 cm bis 4,0 cm fällt.

8. Angelrute von Verbindungstyp nach einem der Ansprüche 1 bis 6, bei der der am weitest hinten liegende der Rutenabschnitte, die hinter den kurzen einen oder zwei Rutenabschnitten angeordnet ist, einen ringförmigen Teil aufweist, der in einem in Längsrichtung dazwischen liegenden Teil angeordnet ist und der dicker als Bereiche ist, die vor und hinter dem dazwischen liegenden Teil angeordnet sind.

## Revendications

1. Canne à pêche du type à raccordement comprenant une section de scion de canne (S1), trois sections de canne intermédiaires (S2 à S7) ou plus et une section de talon de canne (S8), dans laquelle :
parmi les sections de canne intermédiaires (S2 à S7), une ou deux sections de canne intermédiaires autres qu'une section de canne intermédiaire (S2) raccordée directement à la section de scion de canne, sont considérablement plus courtes que la plupart des sections de canne situées vers l'arrière de l'une ou des deux sections de canne intermédiaires ; et
les sections de canne de l'une ou des deux sections de canne courtes et les sections de canne situées vers l'arrière sont raccordées en utilisant une structure de raccordement autre qu'une structure de raccordement télescopique ; **caractérisée en ce que**
le nombre total de sections de canne (S1 à S8) est au moins égal à huit ;
la ou les section(s) de canne intermédiaire(s) plus courte(s) est (sont) n'importe laquelle (lesquelles) de la troisième à la septième sections de canne (S3 à S7) en partant du scion (S1) ; et
un raccordement du type inversé est utilisé pour au moins une partie de raccordement entre des sections de canne adjacentes ; et
dans laquelle chaque section de canne (S1 à S8) est formée comme une section de canne en résine renforcée de fibres, renforcée de fibres de renforcement en utilisant de la résine synthétique comme matrice.

2. Canne à pêche du type à raccordement selon la revendication 1, dans laquelle l'une ou les deux sections de canne intermédiaires courtes ont une longueur allant sensiblement de 45 cm à 90 cm, et la plupart des sections de canne situées vers l'arrière (S8) ont une longueur supérieure ou égale à 130 cm.

3. Canne à pêche du type à raccordement selon la revendication 1 ou 2, dans laquelle un corps principal de chacune des sections de canne situées vers l'arrière contient des fibres de renforcement présentant une orientation longitudinale, ayant un module d'élasticité à la traction non inférieur à 40 t/mm².

4. Canne à pêche du type à raccordement selon l'une quelconque des revendications 1 à 3, dans laquelle un corps principal de chacune des sections de canne situées vers l'arrière est formé dans un pré-imprégné renforcé de fibres ayant des fibres de renforcement primaires présentant une orientation longitudinale et des fibres de renforcement auxiliaires présentant une orientation circonférentielle, les fibres de renforcement auxiliaires étant d'une quantité moindre que les fibres de renforcement primaires, et le module d'élasticité à la traction des fibres de renforcement auxiliaires n'étant pas supérieur au module d'élasticité à la traction des fibres de renforcement primaires et pas inférieur à 30 t/mm².

5. Canne à pêche du type à raccordement selon l'une quelconque des revendications 1 à 4, dans laquelle l'une ou les deux sections de canne intermédiaires courtes (S3 à S7) sont situées dans une zone allant de 2,5 m à 6,5 m à partir d'une pointe de la canne à pêche dans un état raccordé.

6. Canne à pêche du type à raccordement selon l'une quelconque des revendications 1 à 5, dans laquelle au moins l'une parmi les une ou deux sections de canne intermédiaires courtes (S3 à S7) présente une zone dans laquelle le diamètre augmente vers un côté de talon selon une conicité supérieure aux conicités des sections de canne situées vers l'avant et vers l'arrière des une ou deux sections de canne intermédiaires courtes.

7. Canne à pêche du type à raccordement selon l'une quelconque des revendications 1 à 6, dans laquelle au moins l'une parmi les une ou deux sections de canne intermédiaires courtes (S3 à S7) a une extrémité de côté de talon dont un diamètre externe se trouve dans une plage de 2,5 cm à 4,0 cm.

8. Canne à pêche du type à raccordement selon l'une quelconque des revendications 1 à 6, dans laquelle la plus en arrière parmi les sections de canne situées à l'arrière de l'une ou des deux sections de canne intermédiaires courtes, présente une partie annulaire qui est située dans une partie longitudinalement intermédiaire et qui est plus épaisse que les zones situées vers l'avant et vers l'arrière de la partie intermédiaire.
